(19) Europäisches Patentamt
European Patent Office
Office européen des brevets

(11) EP 3 645 583 B1

(12) **EUROPEAN PATENT SPECIFICATION**

(45) Date of publication and mention of the grant of the patent:
**06.07.2022 Bulletin 2022/27**

(21) Application number: **18825486.6**

(22) Date of filing: **21.06.2018**

(51) International Patent Classification (IPC):
***C08K 5/13*** (2006.01) ***F16L 9/12*** (2006.01)

(52) Cooperative Patent Classification (CPC):
(C-Sets available)
**C08K 5/13** (Cont.)

(86) International application number:
**PCT/IB2018/054589**

(87) International publication number:
**WO 2019/003065 (03.01.2019 Gazette 2019/01)**

# (54) POLYOLEFIN ARTICLES WITH IMPROVED RESISTANCE AGAINST CHLORINE DIOXIDE

POLYOLEFINARTIKEL MIT VERBESSERTEM WIDERSTAND GEGEN CHLORDIOXID

ARTICLES EN POLYOLÉFINE PRÉSENTANT UNE RÉSISTANCE AMÉLIORÉE CONTRE LE DIOXYDE DE CHLORE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2017 EP 17178663**

(43) Date of publication of application:
**06.05.2020 Bulletin 2020/19**

(73) Proprietor: **Songwon Industrial Co., Ltd.**
**Ulsan 680-090 (KR)**

(72) Inventors:
- **KECK, Klaus**
  **4031 Angleur (BE)**
- **SCHMUTZ, Thomas**
  **4052 Basel (CH)**
- **KIM, Sua**
  **Ulsan 44766 (KR)**

(74) Representative: **Michalski Hüttermann & Partner Patentanwälte mbB**
**Kaistraße 16A**
**40221 Düsseldorf (DE)**

(56) References cited:
**EP-A1- 0 303 895** **EP-A1- 1 334 994**
**EP-B1- 2 607 417** **WO-A1-2013/091800**
**WO-A1-2014/108382** **WO-A1-2015/191721**
**CN-A- 102 458 795** **US-A1- 2011 259 464**
**US-B1- 6 228 495**

- **BACHERT ISOLDE ET AL: "Stabilizer package development - importance of the test criteria selection", ADDCON WORLD 2000, BASEL, SWITZERLAND,, 1 January 2000 (2000-01-01), XP009502164, ISBN: 978-1-85957-242-9**
- **DATABASE CA [Online] CHEMICAL ABSTRACTS SERVICE, COLUMBUS, OHIO, US; REN, GUOHUI: "Application of polymer additive M4228 for production of propylene copolymer tube", XP002776445, retrieved from STN Database accession no. 155:590250 -& CN 102 229 723 A (DALIAN XINGHUI CHEMICAL CO., LTD., PEOP. REP. CHINA) 2 November 2011 (2011-11-02)**
- **YU , W. et al.: "Chlorine dioxide resistance of different phenolic antioxidants in polyethylene", Polymer Degradation and Stability, vol. 111, 2015, pages 1-6, XP029144474,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 645 583 B1

(52) Cooperative Patent Classification (CPC): (Cont.)

C-Sets
**C08K 5/13, C08L 23/02**

## Description

The present invention relates to a polyolefin composition containing stabilizers and articles made using such polyolefin compositions, such as pipes, packaging articles, films and inliners or the like.

Polyolefins and articles made thereof have only a very limited resistance against the reaction with oxygen and hence in itself are not suitable for semi-durable and durable applications. Hence these articles in itself have only a suitable lifetime (or service life) of several weeks or several months. Within this time frame in general mechanical, optical and organoleptic properties deteriorate to a degree that the article is no longer suitable for its purpose. In order to extend the lifetime, thermal stabilizers (also referred to as antioxidants) need to be added. E.g. in the case of pipes, the required service life is several decades.

Especially for pipes Chlorine Dioxide ($ClO_2$) is used for sterilization due to its high effectiveness in eliminating pathogenic microorganisms such as fungi, bacteria and viruses and also in preventing the formation of biofilm.

However, $ClO_2$, especially or in part due to is radical nature, is known to be usually more aggressive towards stabilizers present in the polyolefin than chlorine itself or other disinfectants. Therefore, it is a constant purpose to provide polyolefin articles that show improved resistance against Chlorine Dioxide.

Polyolefin compositions are *inter alia* known from EP 1 334 994 A1, Bachert Isolde et al., "Stabilizer package development - importance of the test citeria selection", ADDCON WORLD 2000, Basel, Switzerland, 1. January 200, CN 102 229 723 A, and EP 2 607 417 B1.

It is therefore an object to provide polymer compositions which show sufficient stability, especially towards $ClO_2$.

This object is solved by a polymer composition according to Claim 1 of the present invention. Accordingly, a polyolefin composition is provided, comprising a polyolefin and a first stabilizer comprising a phenol moiety which is alkyl substituted in ortho position to the hydroxy group of the phenol moiety but unsubstituted in the other ortho position; and a second stabilizer comprising a phenol moiety which is alkyl substituted in both ortho positions to the hydroxy group of the phenol moiety.

Surprisingly it has been found that by using such a polyolefin composition shows a much higher resistance towards Chlorine Dioxide.

The present invention furthermore relates to a use of a stabilizer composition, comprising a first stabilizer comprising a phenol moiety which is alkyl substituted in ortho position to the hydroxy group of the phenol moiety but unsubstituted in the other ortho position; and a second stabilizer comprising a phenol moiety which is alkyl substituted in both ortho positions to the hydroxy group of the phenol moiety for stabilizing polyolefins against $ClO_2$.

The present invention furthermore relates to a process, comprising stabilizing a polyolefin composition against $ClO_2$ by adding to the polyolefin composition a first stabilizer comprising a phenol moiety which is alkyl substituted in ortho position to the hydroxy group of the phenol moiety but unsubstituted in the other ortho position; and a second stabilizer comprising a phenol moiety which is alkyl substituted in both ortho positions to the hydroxy group of the phenol moiety.

The term "polyolefine" according to the present invention especially means and/or includes all substrates as defined in US 2015/0090671 A1, US 2014/0296398 A1, WO 2006/119935 A1 and/or US 2005/0148700 A1.

The individual stabilizers and components for these stabilizers will be discussed in more detail, whereby any features can be combined ad libitum:

First stabilizer:

According to the invention, the first stabilizer comprises a phenol moiety which is alkyl substituted in ortho position to the hydroxy group of the phenol moiety but unsubstituted in the other ortho position, i.e. a structure which comprises the following moiety:

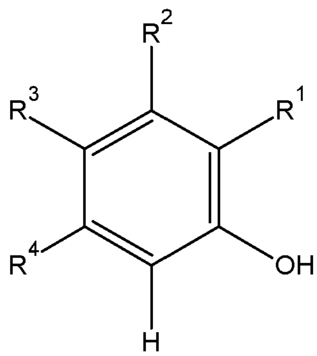

with $R^1$ being alkyl, preferably methyl, ethyl, propyl, n-butyl, isobutyl and t-butyl, $R^2$ to $R^4$ independently are hydrogen or any organic moiety under the proviso that not all $R^2$ to $R^4$ are hydrogen.

According to a preferred embodiment of the present invention, the phenol moiety is substituted in p-position to the hydroxyl group, i.e. $R^3$ is not hydrogen. More preferred $R^2$ and $R^4$ are hydrogen, so that only $R^3$ is substituted out of $R^2$ to $R^4$.

According to a preferred embodiment of the present invention, the first stabilizer comprises two phenol moieties which are linked to each other via a $C_1$-bridge at $R^3$ (which of course may be otherwise substituted, too). This motive may - of course - be present in the stabilizer more than once, i.e. according to a preferred embodiment of the present invention, the first stabilizer comprises one or more pair of phenol moieties, which are linked to each other via a $C_1$-bridge.

According to a preferred embodiment of the present invention the first stabilizer comprises the following molecule:

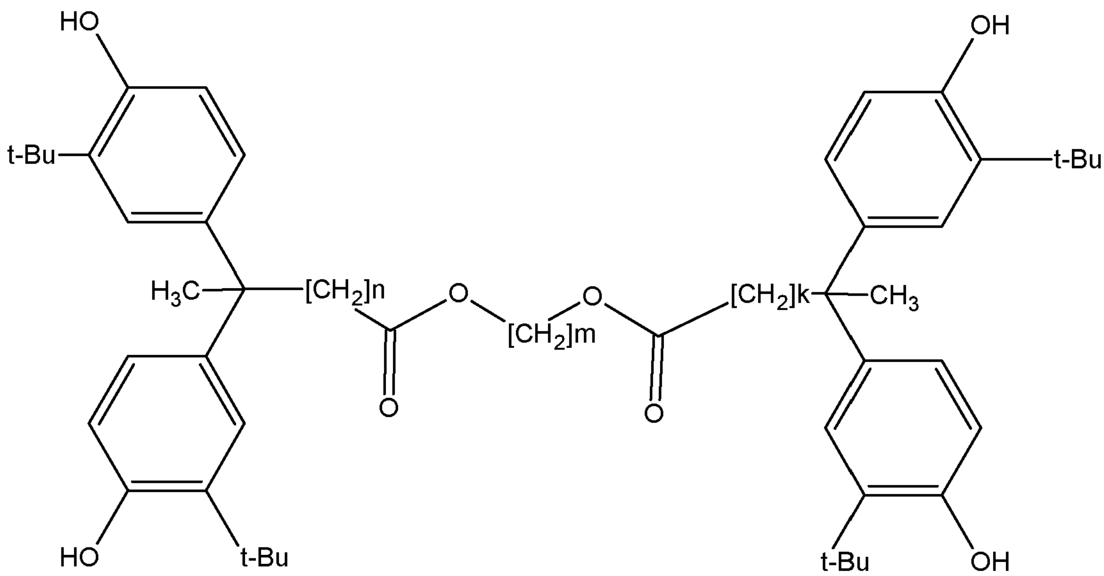

With n, m, k being independent from each other integers from 1 to 4. Preferably n=k=1 and m=2, so that the first stabilizer comprises the following structure:

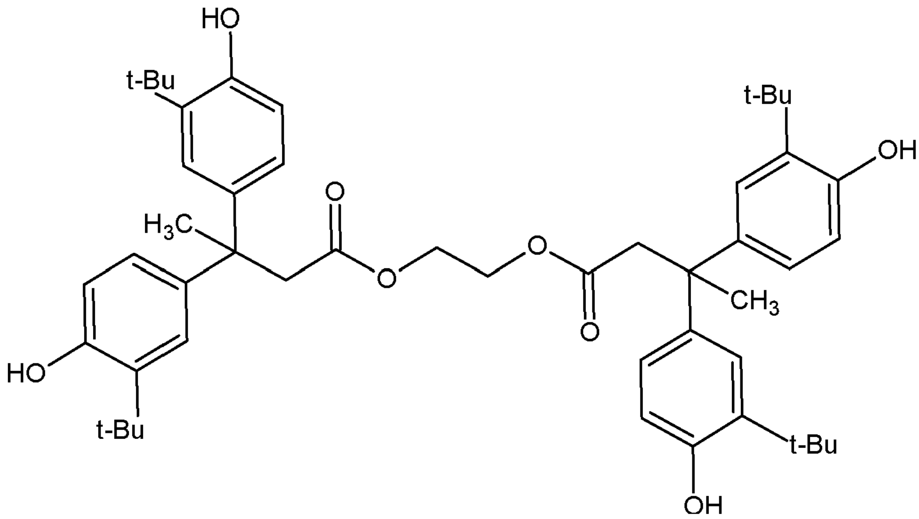

Second stabilizer:

The second stabilizer comprises both of the following structures:

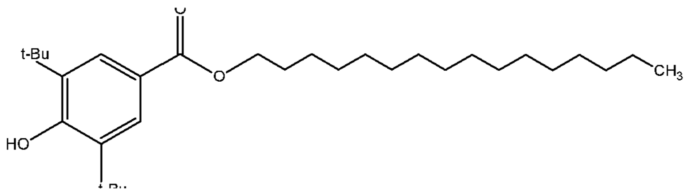

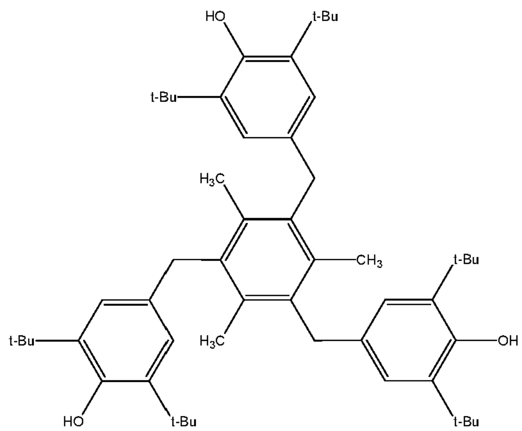

.

According to a preferred embodiment, the polyolefin composition further comprises an acid scavenger. Consequently, the present invention also relates to the use of a stabilizer composition as described above together with an acid scavenger.

The term "acid scavenger" according to the present invention especially means and/or includes a compound which neutralizes acidity which may originate from the polymerization catalyst of the polyolefin synthesis; usually this will be mainly Ziegler/Natta catalysts. It is understood, that not every catalyst used for polyolefin synthesis requires an acid scavenger.

According to a preferred embodiment of the present invention, the acid scavenger comprises, preferably consists essentially of a metal oxide, metal hydroxide, metal organic salt and/or metal carbonate. Especially preferred are hydrotalcite, hydrocalumite, metal fatty acids, zinc oxide and calcium carbonate.

The term "consisting essentially of" in the sense of the present invention especially means and/or includes (in wt/wt) ≥ 95%, more preferred ≥ 98% and most preferred ≥ 99%.

According to a preferred embodiment of the present invention, the metal oxide comprises, preferably consists

essentially of magnesium oxide and/or aluminium oxide.

According to a preferred embodiment of the present invention, the metal hydroxide comprises, preferably consists essentially of calcium hydroxide.

According to a preferred embodiment of the present invention, the acid scavenger comprises, preferably consists essentially of magnesium hydroxycarbonate, aluminium hydroxycarbonate and calcium hydroxide.

Preferably the acid scavenger comprises a layered double hydroxide compound.

Layered double hydroxides (LDHs) in the sense of the present invention are defined as layered materials with positively charged layers and charge balancing anions located in the interlayer region. This is unusual in solid state chemistry as many more families of materials have negatively charged layers and cations in the interlayer spaces (e.g. kaolinite, $Al_2Si_2O_5(OH)_4$).

Usually the layered double hydroxides (LDHs) are compounds according to the following formula

$$[M^{II}_{1-x} M^{III}_{1-x} (OH)_2]^{x+} (A^{n-})_{x/n} \cdot yH_2O$$

wherein

$M^{II}$ is a divalent metal ion, preferably $Mg^{2+}$, $Ca^{2+}$, $Mn^{2+}$, $Fe^{2+}$, $Zn^{2+}$, $Cu^{2+}$, $Ni^{2+}$ and $Co^{2+}$;

$M^{III}$ is a trivalent metal ion, preferably $Al^{3+}$, $Cr^{3+}$, $Fe^{3+}$, Ga<3+ >and $Mn^{3+}$,

$A^{n-}$ is an anion, preferably $Cl^-$, $CO3^{2-}$, $NO3^-$, $Br^-$, $SO4^{2-}$ and alkyl sulfonates, alky aryl sulfonates, organic carboxylates, organic phosphates or mixtures thereof, more preferably $Cl^-$, $CO3^{2-}$, $NO3^-$, $Br^-$, $SO4^{2-}$ or mixtures thereof whereby n is the number of negative charges, e. g. in case of $Cl^-$ n=1 and in case of $CO3^{2-}$n=2, usually n is within the range of 1 to 2;

y is number of water molecules needed to stabilize the crystal structure, usually y is within the range of 0.25 to 4, preferably 0.5 to 4, more preferably 0.5 to 1.0;

x is usually within the range of 0.1 to 0.5, preferably within the range of 0.10 to 0.38, more preferably within the range of 0.10 to 0.33;

Layered double hydroxides (LDHs) are inter alia described in F. Cavani, F. Trifiro, A. Vaccari, Catal. Today 1991, 11, 173) which is herewith incorporated by reference.

In case $A^{n-}$ is an alkyl sulfonate, the alkyl group is usually a C1 to C20 alkyl group.

In case $A^{n-}$ is an alky aryl sulfonate the alky aryl group is a C6 to C20 alky aryl group.

In case $A^{n-}$ is an organic carboxylate, the organic group attached to the carboxylate group(s) usually contains 1 to 20 carbon atoms and up to 5 heteroatoms, preferably, if present, the heteroatoms are selected from N, O, P and S. Usually the organic carboxylate comprises 1 to 2 carboxylate groups, preferably 1 carboxylate group.

The term "organic group attached to the carboxylate group(s)" denotes that the carboxylate groups are not part of the organic group. Thus, the oxygen and carbon atoms present in the carboxylate group do not count for the organic group. Thus, for example in case of acetate, the organic group is methyl.

In case $A^{n-}$ is an organic phosphate the organic group(s) attached to the phosphate group(s) independently usually contains 1 to 20 carbon atoms and up to 5 heteroatoms, preferably, if present, the heteroatoms are selected from N, O, P and S. Usually the organic phosphate comprises one phosphate group and one organic group.

The term "organic group(s) attached to the phosphate group(s)" denotes that the phosphate groups are not part of the organic group(s). Thus, the oxygen and phosphor atoms present in the phosphate group do not count for the organic group. Thus, for example in case of methyl phosphate the organic group is methyl.

Preferably, in the layered double hydroxides (LDHs) are compounds according to the following formula

$$[M^{II}_{1-x}M^{III}_{1-x} (OH)_2]^{x+} (A^{n-})_{x/n} \cdot yH_2O$$

$M^{II}$ is selected from $Mg^{2+}$, $Ca^{2+}$ or $Zn^{2+}$;

$M^{III}$ is $Al^{3+}$;

$A^{n-}$ is an anion selected from $Cl^-$, $CO3^{2-}$ and $NO3^-$

y is within the range of 0.25 to 4, preferably within the range of 0.5 to 1.0

x is within the range of 0.10 to 0.38, preferably within the range of 0.10 to 0.33,

More preferably, the layered double hydroxides (LDHs) is selected from synthetic hydrotalcite

$$Mg_{4.5}Al_2(OH)_{13}(CO3)_{3.5} \cdot H_2O \text{ (CAS-no. 11097-59-9)}$$

or
hydrotalcit

$Mg_6Al_2(OH)_{16}(CO_3)•4H_2O$.

Especially preferred are hydrotalcite, hydrocalumite, metal fatty acids, zinc oxide and calcium carbonate.

According to a preferred embodiment of the present invention the polyolefin composition further comprises an aminic antioxidant.

Preferably the aminic antioxidant is an aromatic compound, with the amine bound to an aromatic core.

Especially preferred are aminic antioxidants selected out of the group comprising phenylenediamines, diphenylamines, quinolines, naphtylamines and mixtures thereof.

More preferred the aminic antioxidant is selected out of the group comprising N,N'-Bis(1,4-dimethylpentyl)-p-phenylenediamine, N-(1,3-Dimethylbutyl)-N'-phenyl-p-phenylenediamine, N-(Methylethyl), N' -Phenyl-1,4-benzoldiamien, N,N'-Diphenyl-1,4-phenylenediamine, styrenated diphenylamines, 4,4, bis ($\alpha$,$\alpha$-domethylbenzyl) diphenylamine, Polymerized 1,2-dihydro-2,2,4-trimethylquinoline, 6-Ethoxy-2,2,4-trimethyl-1,2-dihydroquinoline, N-phenylnaphthalen-1-amine, N-phenyl-2-naphthylamine or mixtures thereof.

According to a preferred embodiment of the present invention, the stabilizer composition does not comprise an antioxidant according to the following structure:

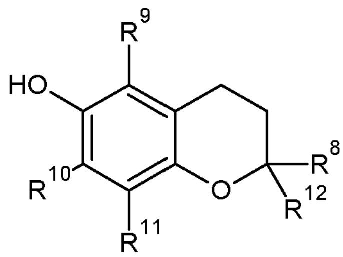

Wherein $R^8$, $R^9$; $R^{10}$, $R^{11}$, and $R^{12}$ independently are H, or non-substituted aliphatic or aromatic hydrocarbyl radicals which may comprise heteroatoms.

According to a preferred embodiment of the present invention, the stabilizer composition does not comprise vitamin E.

The present invention furthermore relates to a product comprising an inventive polyolefin and/or a product making use of the inventive use.

According to a preferred embodiment, the product comprises a product selected from the group comprising

- Pipes
- Rigid packaging
- Flexible packaging
- Protective liners, seals and gaskets

The aforementioned components, as well as the claimed components and the components to be used in accordance with the invention in the described embodiments, are not subject to any special exceptions with respect to their size, shape, material selection and technical concept such that the selection criteria known in the pertinent field can be applied without limitations.

Description of the experimental data:

Polyolefin:

The experimental tests which are described further on were conducted with a commercial HDPE grade polyolefin. It is a Ziegler/Natta catalyzed polyethylene manufactured with a melt flow index $MFI_{2.16/190}$ of 4.0 [g/10 min] and a density of 0.953 [g/cm$^3$].

Sample preparation:

The compounding of the HDPE took place using a Toshiba TEM 37BS twin screw extruder with a temperature profile from 190°C to 215°C under nitrogen. Injection molding of plaques of 1.6 mm thickness was carried out on a Dongshin D-150 injector at a temperature profile of 220 to 245 C. Later-on the samples were manually cut to fit into the water storage device.

Water storage test:

Samples were exposed to water at 70°C which contained 3 ppm chlorine dioxides. The chlorine dioxide level was generated as follows:3.75g of 8% commercial chlorine dioxide solution was added into a 1000 ml beaker. 996.25g of distilled water was added into the beaker. The solution was mixed and subsequently poured into the water bath used for the storage test. The above procedure was repeated and then the water storage device was closed. Chlorine dioxide levels were measured twice a week and corrected in case needed.

Criterion:

OIT (Oxygen Induction Time) was used at a temperature of 200°C and an oxygen flow of 50 ml/min. OIT was carried out on a punched-out sample of 5-8 mg. The OIT test is used as a test to attempt to predict the lifetime of (very) durable plastic articles.

Formulations:

All formulations contained 1200 ppm calcium stearate as antacid and 2000 ppm SONGNOX® PQ as processing stabilizer. For experiment 1, the following formulations were examined

| Sample | First Stabilizer | | Second Stabilizer | |
|---|---|---|---|---|
| | Type | Concentration [ppm] | Type | Concentration [ppm] |
| C.1 | - | - | - | - |
| C.2 | - | - | 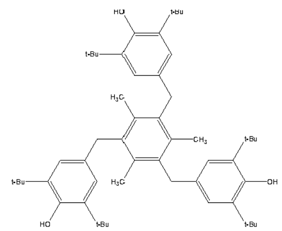 | 3000 |
| C.3 | - | - | 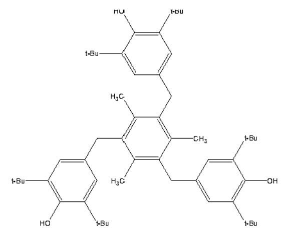 | 6000 |
| C.4 | 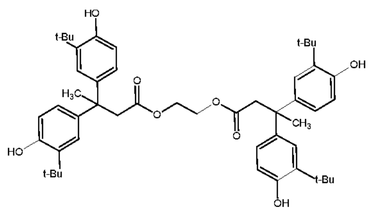 | 3000 | 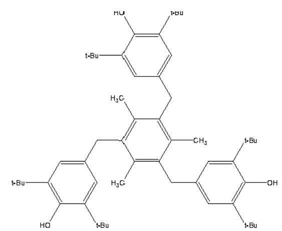 | 3000 |

Experiment 1 yields the following results:

| Formulation | Exposure time [days] until a remaining OIT value of 30 min |
|---|---|
| C.1 | Initial OIT already < 10 |
| C.2 | 81 |
| C.3 | Only marginal improvement over C.2 |
| C.4 | 282 |

As can be seen from comparative example C.1, omitting the addition of a thermal stabilizer, does not yield a polyolefin that is suitable for durable applications (e.g. pipe) as the initial OIT is already very low, which is an indication of a very short lifetime of the plastic article (even before exposure to chlorine dioxide). Addition of a thermal stabilizer which comprises a phenol moiety which is alkyl substituted in both ortho positions to the hydroxy group of the phenol moiety yields a certain level of OIT; however, the OIT level achieved in comparative example C.2 is still considered as insufficient. Comparative example C.3 teaches that the OIT can only be marginally increased by significantly increasing the concentration of the above described thermal stabilizer. Still, the now achieved OIT level is considered insufficient.

Comparative example C.4 teaches surprisingly that the combination of the above mentioned thermal stabilizer which comprises a phenol moiety which is alkyl substituted in both ortho positions to the hydroxy group of the phenol moiety with another stabilizer comprising a phenol moiety which is alkyl-substituted in ortho position to the hydroxy group of the phenol moiety but unsubstituted in the other ortho position, yields a significantly improved OIT (which is considered suitable for durable applications of the plastic article)

In a second set of experiments, the following 3 formulations were evaluated for the absolute OIT value after 8 months of exposure at 70°C to water containing 3 ppm chlorine dioxides.

| Sample | First Stabilizer | | Second Stabilizer | |
|---|---|---|---|---|
| | Type | ppm | Type | ppm |
| C.2 | - | - | 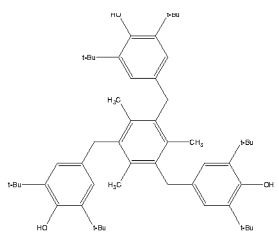 | 3000 |
| C.4 | 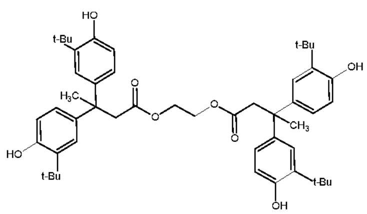 | 3000 | 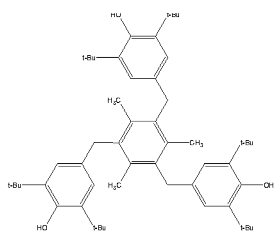 | 3000 |
| C.5 | - | - | 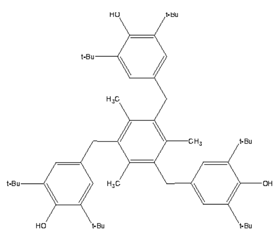 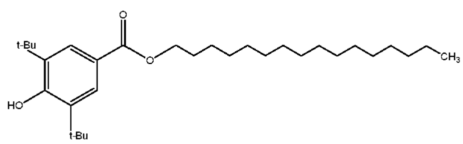 | 3000<br>3000 |

(continued)

| Sample | First Stabilizer | | Second Stabilizer | |
|---|---|---|---|---|
| | Type | ppm | Type | ppm |
| 1.3 | 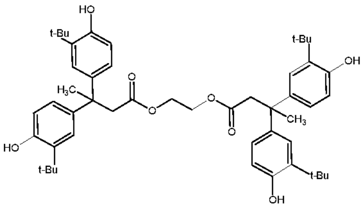 | 1000 | 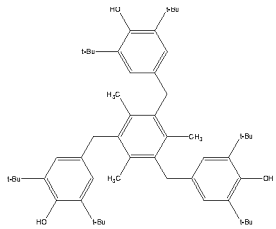 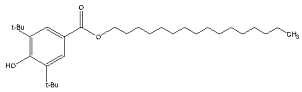 | 3000<br>1000 |

The following results were obtained.

| Formulation | Absolute OIT [Minutes] after 8 months of exposure |
|---|---|
| C.2 | 0 |
| C.4 | 36.8 |
| C.5 | 30.7 |
| 1.3 | 45.3 |

As can be seen from comparative example C.2, the addition of a thermal stabilizer which comprises a phenol moiety which is alkyl substituted in both ortho positions to the hydroxy group of the phenol moiety yields an OIT value of 0 [min], thus indicating an entire depletion of the thermal stabilizer after 8 months. Inventive example 1.3 yields surprisingly by far the highest OIT value, although used at a 33% lower concentrations than comparative examples C.4 and C.5.

## Claims

1. A polyolefin composition, comprising a polyolefin and a first stabilizer comprising a phenol moiety which is alkyl substituted in ortho position to the hydroxy group of the phenol moiety but unsubstituted in the other ortho position; and a second stabilizer comprising a phenol moiety which is alkyl substituted in both ortho positions to the hydroxy group of the phenol moiety, whereby the second stabilizer comprises both of the following structures:

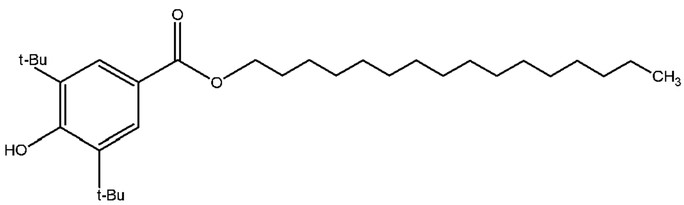

and

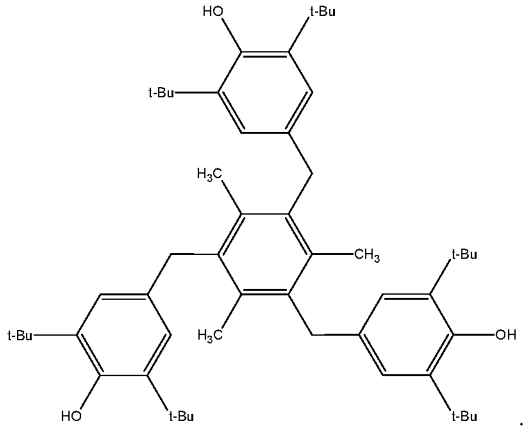

2. The polyolefin composition according to Claim 1, whereby the first stabilizer comprises the following moiety

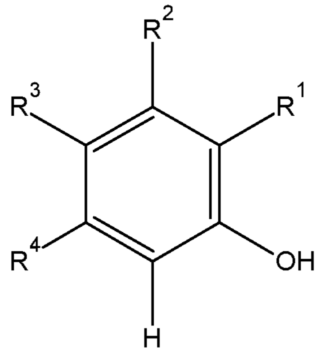

with $R^1$ being alkyl, preferably methyl, ethyl, propyl, n-butyl, isobutyl and t-butyl, $R^2$ to $R^4$ independently are hydrogen or any organic moiety under the proviso that not all $R^2$ to $R^4$ are hydrogen.

3. The polyolefin composition according to Claim 2, whereby in the first stabilizer $R^3$ is not hydrogen and $R^2$ and $R^4$ are hydrogen

4. The polyolefin composition according to any of the claims 1 to 3, whereby the polyolefin composition does not comprise an antioxidant according to the following structure:

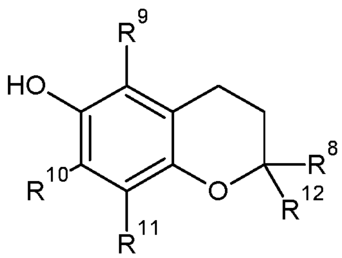

wherein $R^8$, $R^9$; $R^{10}$, $R^{11}$, and $R^{12}$ independently are H, or non-substituted aliphatic or aromatic hydrocarbyl radicals which may comprise heteroatoms.

5. The polyolefin composition according to any of the claims 1 to 4, whereby the polyolefin composition further comprises an acid scavenger

6. The polyolefin composition according to claim 5, whereby the acid scavenger comprises, preferably consists essentially of a metal oxide, metal hydroxide, metal organic salt and/or metal carbonate.

7. The polyolefin composition according to any of the claims 5 or 6, whereby the acid scavenger comprises, preferably consists essentially of magnesium hydroxycarbonate, aluminium hydroxycarbonate and calcium hydroxide.

8. The polyolefin composition according to any of the claims 1 to 7, whereby the polymeric composition furthermore comprises an aminic antioxidant

9. The polyolefin composition according to any of the claims 1 to 8, whereby the polymeric composition furthermore comprises an aminic antioxidant selected out of the group comprising phenylenediamines, diphenylamines, quinolines, naphtylamines and mixtures thereof.

10. Use of a stabilizer composition according to any one of claims 1 to 9 for stabilizing polyolefins against $ClO_2$.

11. A Product comprising a polyolefin according to any of the claims 1 to 9 or making use of claim 10, the product being selected out of:

- Pipes
- Rigid packaging
- Flexible packaging
- Protective liners, seals and gaskets

**Patentansprüche**

1. Polyolefinzusammensetzung mit einem Polyolefin und einem ersten Stabilisator, der eine funktionelle Phenolgruppe aufweist, die in einer ortho-Position zur Hydroxygruppe der funktionellen Phenolgruppe alkylsubstituiert ist, aber in der anderen ortho-Position unsubstituiert ist; und einem zweiten Stabilisator, der eine funktionelle Phenolgruppe aufweist, die in beiden ortho-Positionen zur Hydroxygruppe der funktionellen Phenolgruppe alkylsubstituiert ist, wobei der zweite Stabilisator beide der folgenden Strukturen aufweist:

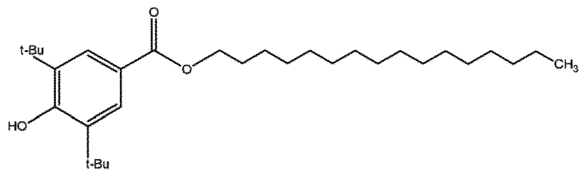

und

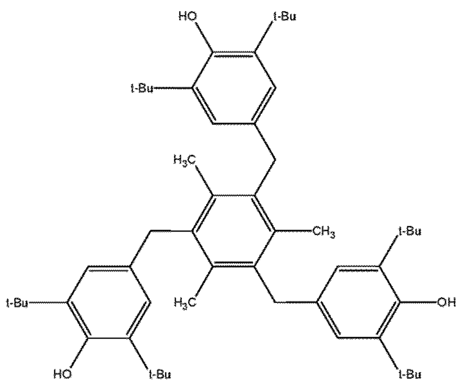

2. Polyolefinzusammensetzung nach Anspruch 1, wobei der erste Stabilisator die folgende funktionelle Gruppe aufweist:

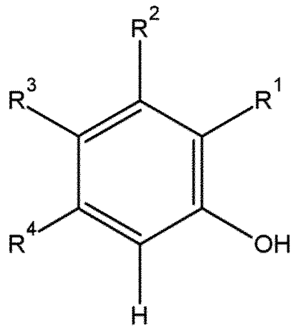

wobei $R^1$ Alkyl, vorzugsweise Methyl, Ethyl, Propyl, n-Butyl, Isobutyl und t-Butyl ist, $R^2$ bis $R^4$ unabhängig voneinander Wasserstoff oder eine beliebige organische funktionelle Gruppe sind, mit der Maßgabe, dass nicht alle Komponenten $R^2$ bis $R^4$ Wasserstoffatome sind.

**3.** Polyolefinzusammensetzung nach Anspruch 2, wobei im ersten Stabilisator $R^3$ nicht Wasserstoff ist und $R^2$ und $R^4$ Wasserstoff sind.

**4.** Polyolefinzusammensetzung nach einem der Ansprüche 1 bis 3, wobei die Polyolefinzusammensetzung kein Antioxidans gemäß der folgenden Struktur enthält:

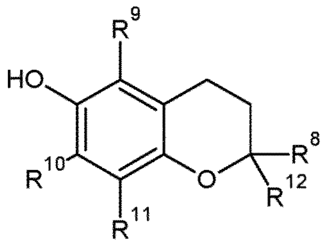

,

wobei $R^8$, $R^9$, $R^{10}$, $R^{11}$ und $R^{12}$ unabhängig voneinander H oder unsubstituierte aliphatische oder aromatische Kohlenwasserstoffradikale sind, die Heteroatome enthalten können.

**5.** Polyolefinzusammensetzung nach einem der Ansprüche 1 bis 4, wobei die Polyolefinzusammensetzung ferner einen Säurefänger enthält

**6.** Polyolefinzusammensetzung nach Anspruch 5, wobei der Säurefänger ein Metalloxid, ein Metallhydroxid, ein organisches Metallsalz und/oder ein Metallcarbonat aufweist und vorzugsweise im Wesentlichen daraus besteht.

**7.** Polyolefinzusammensetzung nach Anspruch 5 oder 6, wobei der Säurefänger Magnesiumhydroxycarbonat, Aluminiumhydroxycarbonat und Calciumhydroxid aufweist und vorzugsweise im Wesentlichen daraus besteht.

**8.** Polyolefinzusammensetzung nach einem der Ansprüche 1 bis 7, wobei die Polymerzusammensetzung außerdem ein aminisches Antioxidans enthält.

**9.** Polyolefinzusammensetzung nach einem der Ansprüche 1 bis 8, wobei die Polymerzusammensetzung außerdem ein aminisches Antioxidans enthält, das ausgewählt ist aus der Gruppe bestehend aus Phenylendiaminen, Diphenylaminen, Chinolinen, Naphthylaminen und Mischungen davon.

**10.** Verwendung einer Stabilisatorzusammensetzung nach einem der Ansprüche 1 bis 9 zum Stabilisieren von Polyolefinen gegen $ClO_2$.

**11.** Produkt mit einem Polyolefin nach einem der Ansprüche 1 bis 9 oder unter Verwendung von Anspruch 10, wobei das Produkt ausgewählt ist aus:

- Rohrleitungen,

- starren Verpackungen,
- flexiblen Verpackungen,
- Schutzauskleidungen, Versiegelungen und Dichtungen.

## Revendications

**1.** Composition de polyoléfine comprenant une polyoléfine et un premier stabilisant comprenant un fragment phénol qui est substitué par un alkyle en position ortho du groupement hydroxy du fragment phénol mais non substitué dans l'autre position ortho ; et un second stabilisant comprenant un fragment phénol qui est substitué par un alkyle dans les deux positions ortho du groupement hydroxy du fragment phénol, dans laquelle le second stabilisant comprend les deux structures suivantes :

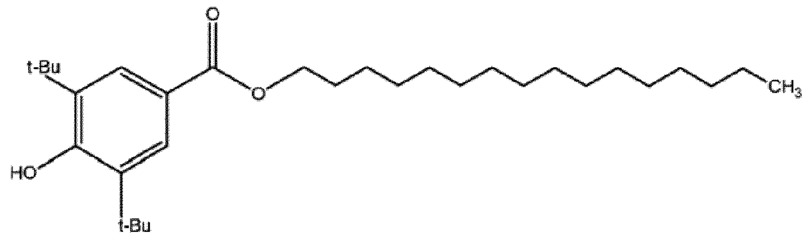

et

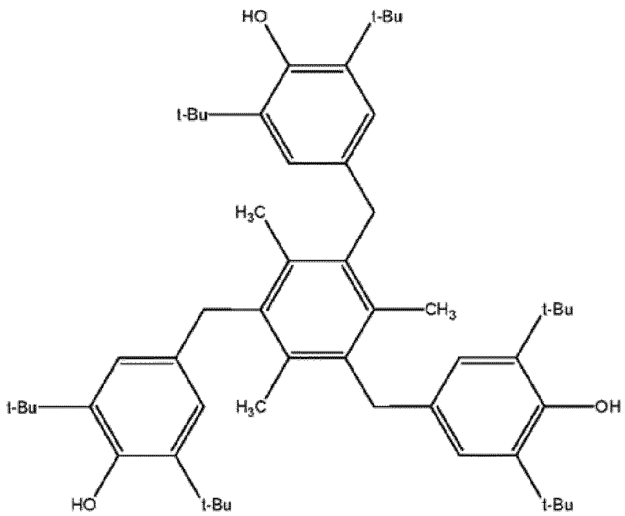

**2.** Composition de polyoléfine selon la revendication 1, dans laquelle le premier stabilisant comprend le fragment suivant :

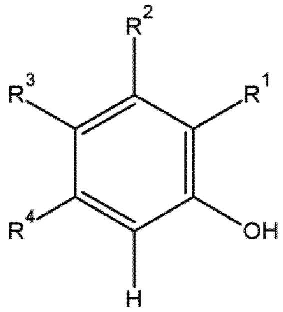

avec $R^1$ étant un alkyle, préférablement méthyle, éthyle, propyle, n-butyle, isobutyle et t-butyle, et $R^2$ à $R^4$ indépendamment un hydrogène ou n'importe quel fragment organique pourvu que $R^2$ à $R^4$ ne soient pas tous des hydrogènes.

3. Composition de polyoléfine selon la revendication 2, dans laquelle dans le premier stabilisant, $R^3$ n'est pas un hydrogène et $R^2$ à $R^4$ sont des hydrogènes.

4. Composition de polyoléfine selon l'une quelconque des revendications 1 à 3, dans laquelle la composition de polyoléfine ne comprend pas un antioxydant selon la structure suivante :

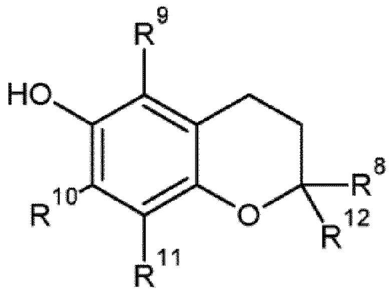

dans laquelle $R^8$, $R^9$, $R^{10}$, $R^{11}$ et $R^{12}$ sont indépendamment un H, ou des radicaux hydrocarbyles aliphatiques ou aromatiques non substitués qui peuvent comprendre des hétéroatomes.

5. Composition de polyoléfine selon l'une quelconque des revendications 1 à 4, dans laquelle la composition de polyoléfine comprend en outre un fixateur d'acide.

6. Composition de polyoléfine selon la revendication 5, dans laquelle le fixateur d'acide comprend, et est préférablement constitué essentiellement d'un oxyde métallique, hydroxyde métallique, sel organique métallique et/ou carbonate de métal.

7. Composition de polyoléfine selon la revendication 5 ou la revendication 6, dans laquelle le fixateur d'acide comprend, et est préférablement constitué essentiellement d'un hydroxycarbonate de magnésium, hydroxycarbonate d'aluminium et/ou hydroxyde de calcium.

8. Composition de polyoléfine selon l'une quelconque des revendications 1 à 7, dans laquelle la composition polymérique comprend en outre un antioxydant aminique.

9. Composition de polyoléfine selon l'une quelconque des revendications 1 à 8, dans laquelle la composition polymérique comprend en outre un antioxydant aminique sélectionné parmi le groupe comprenant les phénylènediamines, diphénylamines, quinoléines, naphtylamines et mélanges de celles-ci.

10. Utilisation d'une composition stabilisante selon l'une quelconque des revendications 1 à 9 pour la stabilisation de polyoléfines contre $ClO_2$.

11. Produit comprenant une polyoléfine selon l'une quelconque des revendications 1 à 9 ou étant inclus dans l'utilisation selon la revendication 10, ledit produit étant sélectionné parmi :

- des tuyaux
- des emballages rigides
- des emballages flexibles
- des revêtement protecteurs et joints de protection

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1334994 A1, Bachert Isolde
- CN 102229723 A
- EP 2607417 B1
- US 20150090671 A1
- US 20140296398 A1
- WO 2006119935 A1
- US 20050148700 A1